# EUROPEAN PATENT SPECIFICATION

(11) **EP 2 941 345 B1**
(45) Date of publication and mention of the grant of the patent: **20.10.2021**
(21) Application number: 13799170.9
(22) Date of filing: 20.11.2013
(51) Int. Cl.: B29C 70/54, B29C 70/20, B29C 70/30, B64C 1/06, B29D 99/00, B29L 31/00

(54) **METHOD OF FABRICATING A CURVED COMPOSITE STRUCTURE USING COMPOSITE PREPREG TAPE**
VERFAHREN ZUR HERSTELLUNG EINES GEWÖLBTEN VERBUNDSTRUKTUR MIT EINEM PREPREG-VERBUNDBAND
PROCÉDÉ DE FABRICATION D'UNE STRUCTURE COMPOSITE INCURVÉE À L'AIDE D'UNE BANDE DE PRÉIMPRÉGNÉ COMPOSITE

(30) Priority: 07.01.2013 US 201313736021
(43) Date of publication of application: 11.11.2015
(73) Proprietor: The Boeing Company, Chicago, IL 60606-1596 (US)
(72) Inventor: SMITH, Daniel Richard, Seattle, Washington 98124-2207 (US); MODIN, Andrew E., Enumclaw, Washington 98022-6883 (US); DEPASE, Edoardo, Manhattan Beach, California 90266 (US); DARROW, Donald Chester, Tukwila, Washington 98188 (US); KLEWIADA, Mark, Seattle, Washington 98146 (US)
(74) Representative: Lloyd, Robin Jonathan
(86) International application number: PCT/US2013/070918
(87) International publication number: WO 2014/107241

(56) References cited:
- EP-A2- 2 452 806
- EP-A2- 2 452 806
- WO-A2-2009/020971
- US-A- 4 961 700
- US-A1- 2010 136 293
- US-A1- 2012 076 973

## Description

### BACKGROUND INFORMATION

### 1. Field:

This disclosure generally relates to processes for fabricating curved composite structures, and deals more particularly with a method of fabricating composite structures such as stiffeners having compound curves using composite prepreg tape.

### 2. Background:

During layup of prepreg plies over a tool, it is sometimes necessary to closely conform the plies to curves, contours and/or features of the tool in order to assure that the fibers follow the load path, and the layup is dimensionally accurate and substantially free of voids, wrinkling and/or buckling. Known techniques for conforming plies to curved tool surfaces involve darting, cutting and/or splitting the plies during the layup process, and/or extensive hand sweeping to conform a ply to contoured tool surfaces. These techniques can be time consuming and/or may not result in a cured part having the desired mechanical strength. Another solution to the problem involves incrementally steering relatively narrow slit prepreg tape onto a contoured tool in order to form curved plies. However the use of slit tape may increase material costs and reduce production rates since laying down slit tape may be more time consuming.

Accordingly, there is a need for a method of laying up and forming curved composite plies, especially 0 degree plies, using substantially straight unidirectional prepreg tape. There is also a need for a method of laying up and forming curved zero degree plies that avoids the need for incrementally steering individual strips of slit tape around a curved tool.

US 2010/136293 and US2012076973 describe a process of manufacturing a curved structural part made of composite material.

### SUMMARY

The disclosed configurations provide a method of supporting, positioning and deforming straight, unidirectional prepreg tape, while it is being conformed to complex shapes, contours and features of a tool. Straight lengths of unidirectional prepreg tape are used to form structures having compound curves. The method utilizes a deformable carrier film to support plies formed from the tape during the layup process in order to prevent the plies from wrinkling and/or buckling as they are being laid up. Use of the carrier film allows the prepreg plies to be accurately positioned and uniformly deformed as needed to conform to contoured tool surfaces. The carrier film may also be used to stabilize a composite ply during handling and transporting. The method may eliminate the need for the use of narrow slit tape, and relatively expensive automated slit tape placement equipment to incrementally layup zero degree plies. The method may also reduce or eliminate the need for hand working, darting, cutting, and splitting of plies during the layup process. Further, the method may reduce the time required for laying up and forming complex contoured structures by using full width composite prepreg tape. Additionally, the method may improve the accuracy of ply boundaries and provide more uniform deforming of ply material when required, resulting in improvements in both the strength and appearance of cured composite parts.

The disclosed method includes laying up a zero degree ply on a deformable carrier film in a substantially rectilinear or straight direction. The zero degree ply may comprise multiple widths of a prepreg tape or a single width of the tape arranged in different layers, or in spaced apart segments. The ply segments may be staggered and then overlapped in a subsequent forming operation to create a desired ply length.

According to the claimed invention, there is provided, a method of fabricating a composite stiffener having a curved web and at least one curved flange as claimed in claim 1.

### BRIEF DESCRIPTION OF THE ILLUSTRATIONS

FIG. 1 is an illustration of a plan view of a composite prepreg ply held on a deformable carrier film, prior to deforming, present only to assist in the understanding of the invention.
FIG. 2 is an illustration of a perspective view of a corner of the carrier film viewed from the direction shown as '2' in FIG. 1.
FIG. 3 is an illustration of a view of the ply in direction shown as '3' in FIG. 2.
FIG. 4 is an illustration of a plan view of the carrier film showing several courses of composite material having been applied to the film, present only to assist in the understanding of the invention.
FIG. 5 is an illustration of the area designated as '5' in FIG. 4.
FIG. 6 is an illustration similar to FIG. 1 but showing the carrier film and the ply having been deformed, present only to assist in the understanding of the invention.
FIG. 7 is an illustration similar to FIG. 2 showing a corner of the ply and the carrier film after deforming, present only to assist in the understanding of the invention.
FIG. 8 is an illustration of a sectional view of the deformed ply viewed in the direction shown as 8' in FIG. 7.
FIG. 9 is an illustration of a plan view of a 90 degree ply on a carrier film that has been deformed to stretch the ply into a fan shaped pattern, present only to assist in the understanding of the invention.
FIG. 10 is an illustration of a plan view of a carrier film having a 45 degree ply compacted thereon, prior to deforming, present only to assist in the understanding of the invention.
FIG. 11 is an illustration similar to FIG. 10 but showing the carrier film and ply having been deformed in orthogonal directions, present only to assist in the understanding of the invention.
FIG. 12 is an illustration of a sectional view of a carrier film having a ply, a ply doubler and a release film strip applied thereto, present only to assist in the understanding of the invention.
FIG. 13 is an illustration of a carrier film prior to deforming which includes a substantially non-deformable area containing a fiber reinforcement, present only to assist in the understanding of the invention.
FIG. 14 is an illustration similar to FIG. 13 but showing portions of the carrier film having been deformed, present only to assist in the understanding of the invention.
FIG. 15 is an illustration of a plan view of a carrier film having an isolated area of reinforcement therein, present only to assist in the understanding of the invention.
FIG. 16 is an illustration of a sectional view taken along the line 16-16 in FIG. 15.
FIG. 17 is an illustration of a carrier film having an integrally formed embossment, present only to assist in the understanding of the invention.
FIG. 18 is an illustration of a flow diagram of a method of laying up a composite structure using a deformable carrier film for ply layup.
FIG. 19 is an illustration of a perspective view of a composite stiffener, present only to assist in the understanding of the invention.
FIG. 20 is an illustration of diagrammatic views showing the steps of a method for laying up composite plies using the deformable carrier film to form the stiffener shown in FIG. 19, present only to assist in the understanding of the invention.
FIG. 21 is an illustration of a plan view of a ply carrier assembly having a zero degree ply.
FIG. 22 is an illustration of a cross sectional view of an alternate ply carrier assembly in which the zero degree ply includes multiple layers of tape segments.
FIG. 23 is an illustration of an end view of a curved forming tool.
FIG. 24 is an illustration of a perspective view of the curved forming tool shown in Fig. 23, with a ply carrier assembly positioned in readiness to be formed onto the tool.
FIG. 25 is an illustration similar to FIG. 23 but showing a first portion of a ply carrier assembly having been steered and clamped onto a first curved surface of the tool.
FIG. 26 is an illustration similar to FIG. 25 but showing a second portion of the ply carrier assembly having been formed onto a second curved surface of the tool.
FIG. 27 is an illustration similar to FIG. 26 but showing the deformable carrier film having been removed from the formed ply.
FIG. 28 is an illustration of a plan view of an alternate ply carrier assembly in which an edge of a zero degree ply has been contoured.
FIG. 29 is an illustration of a perspective view of a composite structure having a contoured edge fabricated from the contoured ply shown in FIG. 28.
FIG. 30 is an illustration of a flow diagram of a method of forming a curved composite structure.
FIG. 31 is an illustration of a flow diagram of aircraft production and service methodology.
FIG. 32 is an illustration of a block diagram of an aircraft.

### DETAILED DESCRIPTION

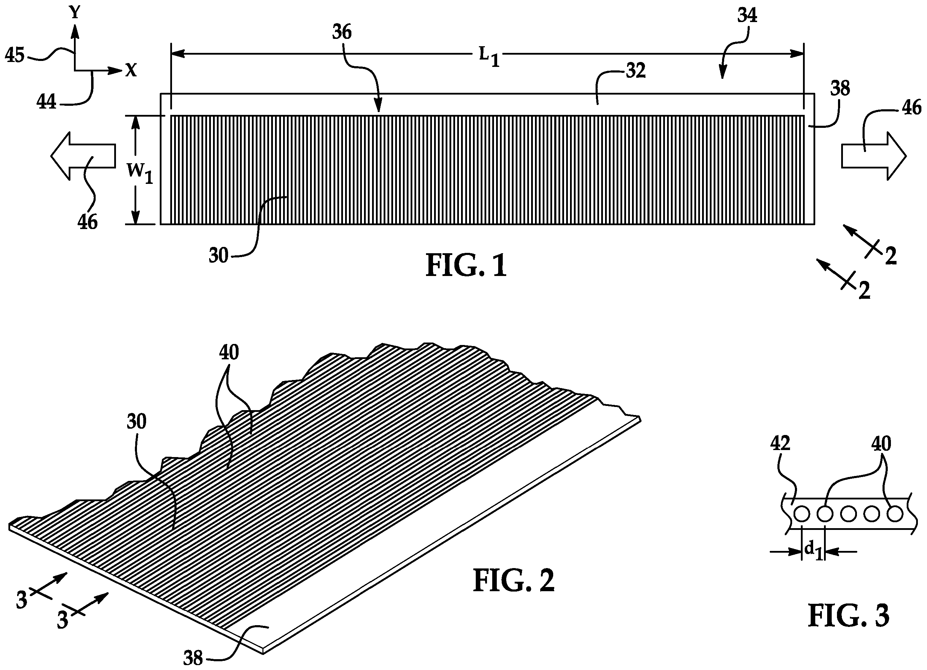

Referring first to FIGS. 1, 2 and 3, a ply 30 of composite resin material is held in face-to-face contact on a carrier film 32 to form a ply carrier assembly 34. The carrier film 32 may be used to transport the ply 30 and/or to apply the ply 30 to a tool (not shown) during a layup process for producing a composite part layup (not shown). In the example illustrated in FIGS. 1-3, which is outside the scope of the claimed subject-matter, the ply 30 may be a prepreg that includes unidirectional reinforcing fibers 40 having a 90 degree orientation, however other plies (not shown) in the part layup may have other fiber orientations based on a predefined ply schedule.

The fibers 40 are pre-impregnated with a suitable polymer resin 42 which acts as a matrix to hold the fibers 40 in the desired orientation following curing. The composite ply 30 has a length **L₁** and a width **W₁** prior to being deformed during the layup process, as will be described in more detail below. The ply 30 is adhered to the carrier film 32 by the tackiness of the uncured resin 42 in the ply 30, however additional tackifiers may be used to provide the necessary adherence between the ply 30 and the carrier film 32. Following placement of the ply 30 on the carrier film 32, the ply 30 may be compacted against the carrier film 32 to assure that the ply is substantially free of buckling, wrinkles or other irregularities.

The ply 30 may be placed on the carrier film 32 so as to leave one or more edge margins 36, 38 on the carrier film 32 around the ply 30 to facilitate handling of the carrier film 32 and/or attachment of hardware or equipment (not shown) to the carrier film 32 that may be used to deform, manipulate and/or hold the carrier film 32 during the layup process. As will be discussed below, once compacted on the carrier film 32, the ply carrier assembly 34 can be deformed to fit different contours and shapes of a tool (not shown). The carrier film 32 allows for controlled and uniform or non-uniform deforming of the resin 42, and may also be used only as a carrier for transporting the prepreg ply 30 from an offline layup station (not shown) to the layup tool (not shown). As used herein, "deform" and "deforming" refer to stretching and/or shearing of a ply material in one or more directions, including simple and compound curves, and within one or more planes.

The carrier film 32 may be deformed in at least one direction, which in the illustrated example, is along an X axis 44, transverse to the orientation of the fibers 40. The carrier film 32 may comprise, for example and without limitation, a latex rubber or similar natural or synthetic deformable material having a thickness suitable for the application. The carrier film 32 material may be an elastic material that returns substantially to its original size and shape following deforming. During the layup process, the ply 30 may be deformed by grasping the carrier film 32 at the opposite edge margins 38 and pulling carrier film 32 in opposite directions indicated by the arrows 46, substantially along the X axis 44.

Prior to the ply 30 being deformed, the fibers 40 may have an inter-spacing **d₁.** The visco-elastic resin 42 (FIG. 3) yields when deformed in a direction perpendicular to the fiber direction (in this case, the X axis 44), thereby allowing the fibers 40 to slip or shear substantially simultaneously in a direction parallel to the fiber direction, i.e. along the Y axis 45, which permits the prepreg ply 30 to conform to the contours of a layup tool (not shown).

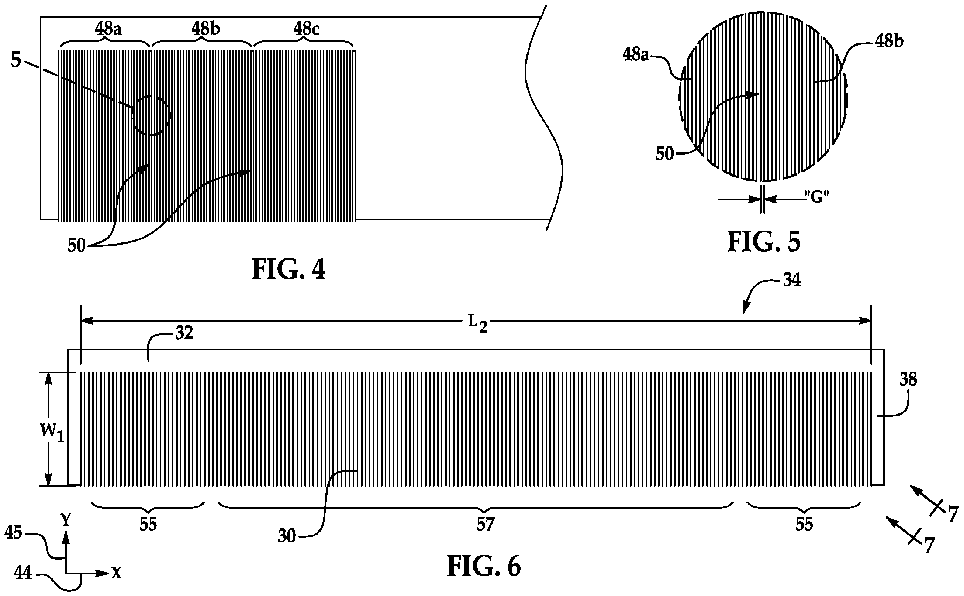

Referring to FIGS 4 and 5, the ply 30 may be applied to the carrier film 32 by placing a plurality of individual courses 48a, 48b, 48c of unidirectional split tape or tows on the carrier film 32, in a side-by-side, substantially parallel and abutting relationship either by hand or by using automated fiber placement equipment (not shown). Depending on the application and the particular materials being used, the edges 50 of the courses 48 may overlap slightly or may form gaps **G** between the courses 48. Deforming of the carrier film 32 may be used to control the size of the overlap or gap **G** between the courses 48 during layup of the ply 30 on a tool (not shown). Furthermore, the carrier film 32 may be used to change the grade of a prepreg material used to form the ply 30. For example, the grade (areal weight) of a prepreg material may be changed by uniformly deforming the material to a desired grade. Changing the grade of a prepreg material in this manner using the carrier film 32 may be useful in producing interleafed doublers that may reduce part weight, and/or material costs.

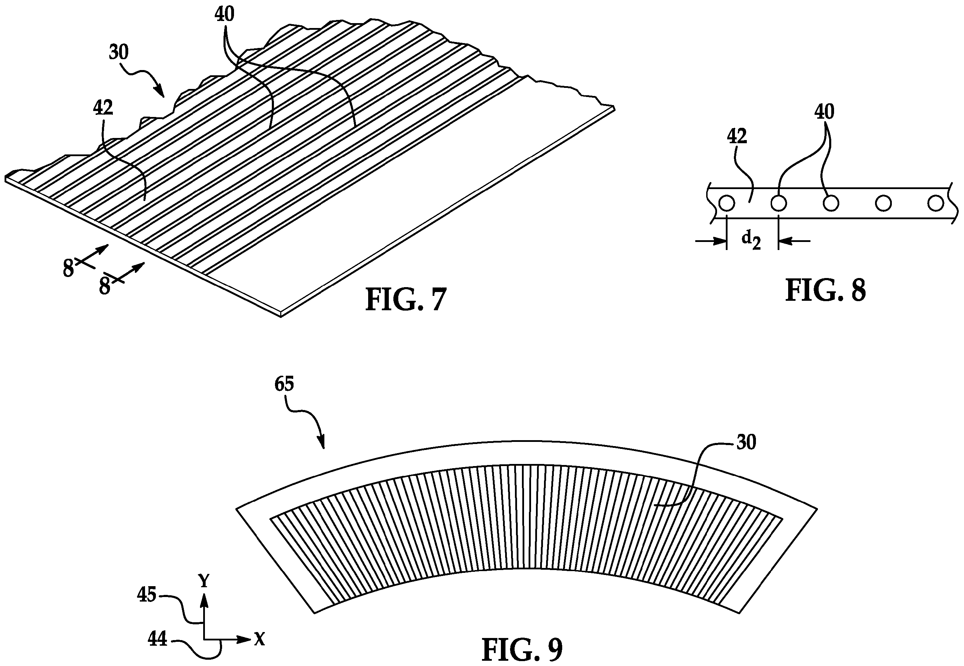

FIGS. 6, 7 and 8 illustrate the ply 30 following deformation along the X axis 44 in the direction of the arrows 46 in FIG. 1. From FIG. 6 it can be seen that while the width **W₁** of the ply 30 remains substantially the same, the ply 30 has been deformed to a greater length **L₂** as a result of the deforming of the carrier film 32. Deforming of the carrier film 32 effectively deforms the resin 42 in the ply 30 which results in an increase in the spacing between the reinforcing fibers to a dimension **d₂** (FIG. 8) which is greater than **d₁** (FIG. 3). Deforming the ply 30 in this manner may allow the ply 30 to better conform to contours and other features of a tool surface (not shown) during the layup process, and may stabilize the ply material during layup. The carrier film 32 may prevent the prepreg ply 30 from splitting, wrinkling and/or buckling as it is being formed over a tool (not shown), and may allow the ply 30 to be precisely positioned on the tool during the layup process. It should be noted here that generally, when deforming a 90 degree ply 30 as described above in connection with FIGS. 1-8, the fibers 40 may be expected to deform substantially uniformly along the X axis 44. However, when deforming non-90 degree plies 30, the fiber deformation may not be uniform. For example, when deforming a 0 degree ply 30 (not shown) in the direction of the X axis 44, the fibers 40 near the ends 55 (FIG. 6) of the ply 30 may shear at an angle (not shown) relative to the fibers 40 near the center 57 of the ply 30 which retain their 0 degree orientation. This shearing effect may occur gradually, growing increasingly from the center 57 toward the ends 55. Compensation for this shearing deformation may be achieved by cutting the ends 55 of the ply 30 at a pre-selected angle (not shown). When deforming a 45 degree ply 30, both shearing and stretching of the fibers 40 may occur.

FIG. 9 illustrates the use of the carrier film 32 to deform a 90 degree ply 30 into a radial or fan-like pattern 65 within a single plane, wherein the fiber directions are shown in solid lines. Although not shown in the Figure, this same radial pattern 65 may be deformed into other planes.

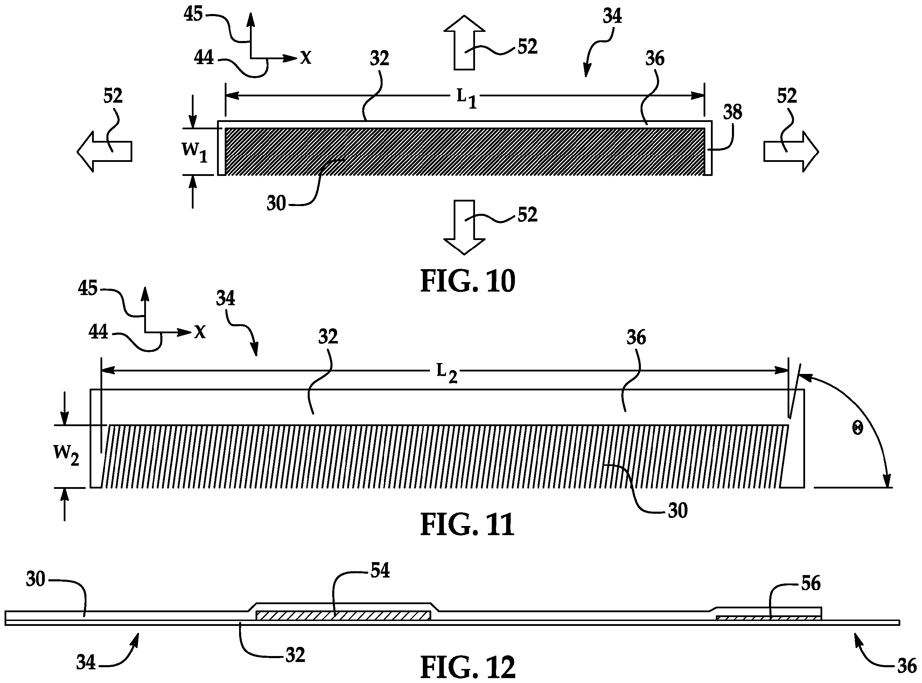

FIGS. 10 and 11 illustrate a prepreg ply 30 having a 45 degree fiber orientation, in an embodiment which is outside the scope of the claimed subject-matter, which has a width **W₁** and a length **L₁** prior to deforming as shown in FIG. 10. In this example, appropriate tension 52 applied to the carrier film 32 causes the carrier film 32 to deform along orthogonal X and Y axes 44, 45, and likewise deforms the ply 30 to both a greater length **L₂** and a greater width **W₂.** Stretching of the carrier film 32 along the Y axis 45 results in a change in the orientation angle of the fibers 40 to some angle **θ** greater than 45 degrees. Although the ply examples shown in FIGS. 1-10 are shown being deformed along single axis or two orthogonal axes 44, 45, the ply 30 may be deformed in other directions and within other planes, depending on the requirements of the application and the geometry of the tool (not shown) to which the ply 30 must be conformed, as well as how tension 52 is applied to the carrier film 32. Moreover, as will be discussed below, it may be possible to deform only one or more portions of the carrier film 32 so that only corresponding portions (not shown) of the ply 30 are deformed during the layup process.

In some applications, it may be possible to use the carrier film 32 to pre-position and place additional items of a layup assembly on a tool (not shown), such as without limitation, doublers, release films, and caul plates, along with the ply 30. For example, FIG. 12 illustrates a ply 30 placed on a carrier film 32 in which a composite doubler 54 is sandwiched between the ply 30 and the carrier film 32. Similarly, a strip 56 of release film is sandwiched between the ply 30 and the carrier film 32 along the edge margin 36 on the carrier film 32 which may aid in releasing and peeling the carrier film 32 away from the laid up ply 30. Thus, in this example, during the layup process, use of the carrier film 32 allows the ply 30, the doubler 54 and the release film strip 56 to be precisely positioned relative to each other, and to be laid up over a tool (not shown) in a single step.

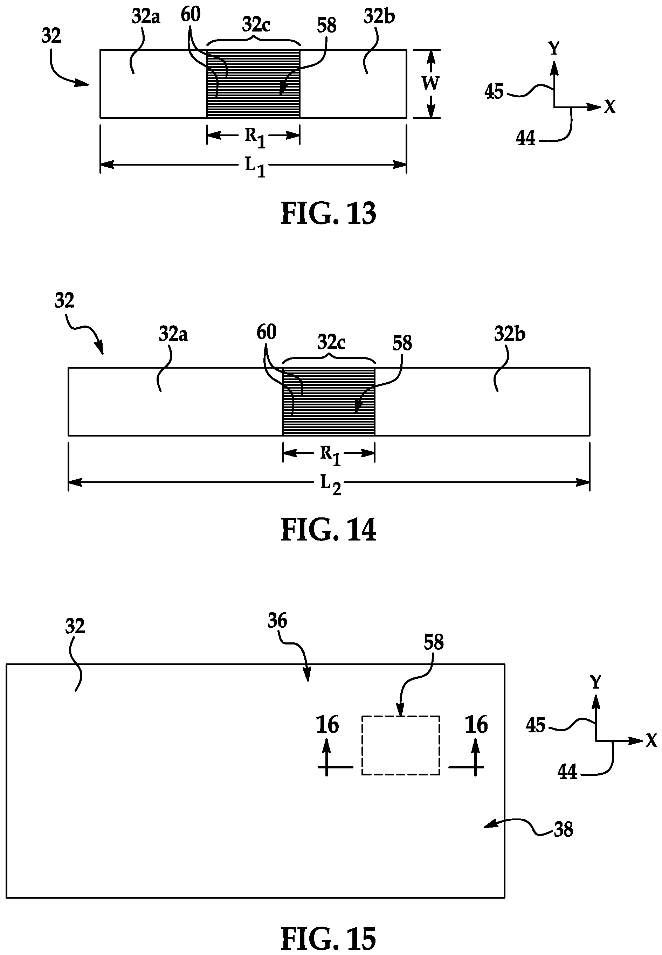

As previously mentioned, it may be possible or desirable in some applications to deform only a portion of the ply 30 during the layup process. deformation of the carrier film 32 can be tailored to selectively constrain the elasticity of the ply carrier film 32 using any of several techniques that suit part geometry and forming requirements. FIG. 13 illustrates a carrier film 32 having a section 32c that includes a reinforcement 58 which resists deforming as the carrier film 32 is being deformed during the layup process. In this example, the reinforcement of section 32c is achieved by impregnating unidirectional fibers 60 into the carrier film 32, oriented in the direction that the carrier film 32 is to be deformed, which in this example, is along the X axis 44.

Prior to deformation, carrier film 32 has a length **L₁** and the reinforced section 32c has a width **R₁** as shown in FIG. 13. When the carrier film 32 is deformed along the X axis 44, which corresponds to the axial direction of the fibers 60, the fibers 60 do not deform substantially, consequently the width **R₁** of the reinforced section 32c remains substantially the same while the overall length of the carrier film 32 deforms to **L₂** as a result of the non-reinforced sections 32a, 32b of the film 32 on each side of the reinforced section 32c being allowed to deform. It may also be possible to employ a reinforcement 58 in the reinforced section 32c which allows some degree of deformation of the carrier film 32, but less than other, non-reinforced areas of the carrier film 32. The reinforcement 58 may comprise, for example and without limitation, cross stitching (not shown) in the carrier film 32. Depending on the type of reinforcement that is used, the width W of the reinforced section 32c may or may not become more narrow when the carrier film 32 is stretched.

In the case of the example shown in FIGS. 13 and 14, the reinforced section 32c is centrally located within the carrier film 32 and the reinforcement 58 extends across its entire width **W.** FIG. 15 illustrates an example in which the area of reinforcement 58 is spaced inwardly from the edge margins 36, 38 of the carrier film 32 and is disposed off-center within the area of the carrier film 32. As in the example shown in FIGS. 13 and 14, the area of reinforcement 58 shown in FIG. 15 also may incorporate reinforcing fibers 60 (see FIG. 14) into the carrier film 32 which may be unidirectional or multi-directional. For example, the fibers 60 may be woven together and incorporated into the carrier film 32 in a manner that resists deforming in two orthogonal directions, e.g. along the X and Y axes 44, 45, corresponding to the orientations of the reinforcing fibers. Similarly, fibers 60 may be placed in additional orientations, e.g. 45 degree orientations, to resist deformation of the carrier film 32 within the area of reinforcement 58 in other directions. While the area of reinforcement 58 is shown as being generally square in shape, a variety of other shapes are possible.

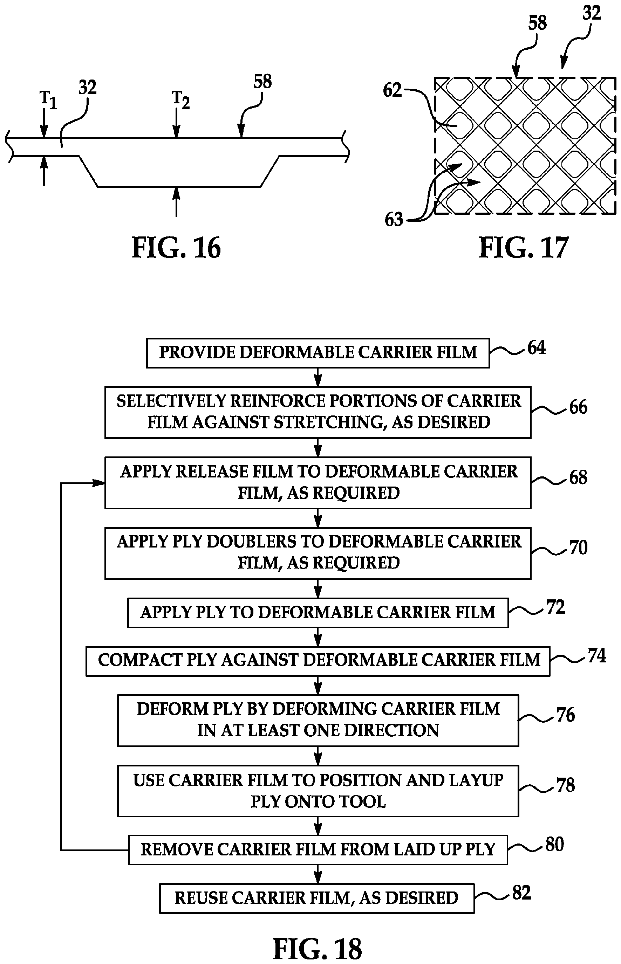

Other reinforcing techniques to prevent or reduce local deformation of the carrier film 32 are possible. For example, as shown in FIG. 16, the substantially non-deformable, area of reinforcement 58 of FIGS. 13, 14 and 15 may be achieved by increasing the thickness **T₁** of a carrier film 32 to a thickness **T₂** in the area of reinforcement 58. FIG. 17 illustrates another technique for achieving the desired reinforcement, in which the carrier film 32 includes embossed dimples 62 in a desired pattern 63, in this case, diamonds that resist deforming in one or more directions. In some applications, it may be desirable to employ more than one of the above described techniques to achieve substantially non-deformable areas of reinforcement 58. For example, and without limitation, a combination of embossed dimples 62, increased film thickness **T₂** and reinforcing fibers 60 may be used. It may also be possible to use one or more of the above reinforcement techniques to achieve differing degrees of film elongation in differing regions of the carrier film 32.

Attention is now directed to FIG. 18 which broadly illustrates the steps of a method of laying up plies to form a composite part using the deformable carrier film 32 previously described and which is outside the scope of the claimed subject-matter. Beginning at 64, a deformable carrier film 32 is provided having a size and shape suitable for the application and the plies 30 to be laid up. At 66, portions of the deformable carrier film 32 may be reinforced, as desired. At 68, a release film 56 (FIG. 12) may be applied to the deformable carrier film 32, as required, to aid in the removal of the carrier film 32 from the ply 30 following layup. At 70, one or more ply doublers 54 (FIG. 12) or other materials may be applied to the deformable carrier film 32, as desired.

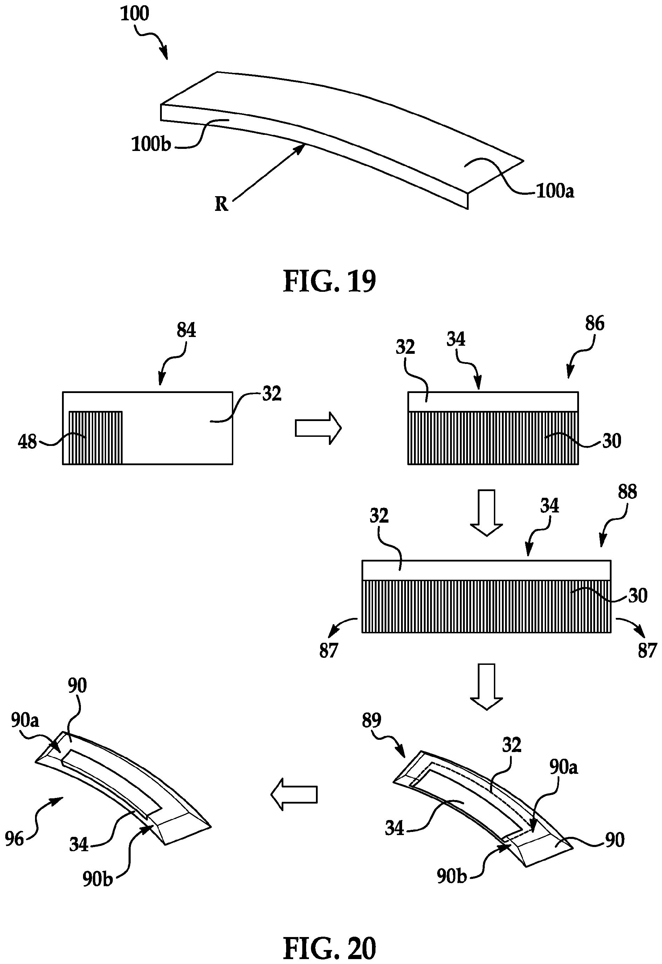

At 72, a prepreg ply 30 is applied to the deformable carrier film 32 either manually, or using automated equipment to lay down courses 48 (FIG. 4) of prepreg material in a side-by-side, possibly substantially abutting relationship on the carrier film 32. The ply 30 is laid up on the carrier film 32 in a reversed, mirror image-like fashion such that the left and right of the ply 30 are reversed. By reversing the ply 30 on the carrier film 32, the ply 30 will have the proper orientation when transferred from the carrier film 32 to a tool 90 (see FIG. 20). At 74, the ply material, including any doublers and/or release films are compacted against the deformable carrier film 32. This compaction may be performed mechanically with a hand sweep (not shown) or using a vacuum either with or without the application of heat. At 76, the carrier film 32 is deformed in at least one direction, thereby deforming the ply 30 to the desired shape and/or dimensions best suited for layup on the tool 90, including the shape and topography of the tool 90. At 78, with the ply 30 located on the carrier film 32, and positioned between the carrier film 32 and the tool 90, the carrier film 32 is used to position and layup the ply 30 onto a tool 90 (see FIG. 20). At 80, following layup of the ply 30 onto the tool 90, the carrier film 32 is removed, as by peeling it away from the laid-up ply 30. At 82, the carrier film 32 may be reused, if desired, or discarded. Steps 68-80 may be repeated until all of the plies 30 of the part layup have been laid up.

FIG. 20 diagrammatically illustrates the steps of the layup method shown in FIG. 18, in which a curved composite structure comprising a stiffener 100 shown in FIG. 19 having at least two legs and radius of curvature R is laid up on a tool 90. The tool 90 includes two contiguous, curved tool surfaces 90a, 90b for respectively forming a first leg comprising a curved web 100a and a second leg comprising a curved flange 100b of the stiffener 100 shown in FIG. 19. As shown at 84, courses 48 of unidirectional prepreg material are laid down side-by-side on a deformable carrier film 32 to form a completed 90 degree ply 30 shown at 86. The completed ply 30 is then compacted onto the carrier film 32, following which at 88, the carrier film 32 is then stretched and deformed radially as shown by arrows 87 to generally match the curvature of the tool surface 90a. As shown at 89, the ply 30 is deformed into a fan shape and placed onto the curved tool surface 90a using the carrier film 32 to form the curved web 100a of the stiffener 100. The carrier film 32 and a peel ply (not shown) may then be removed from the partially formed ply 30. With the carrier film 32 having been removed, the ply 30 is then formed down over the curved tool surface 90b as shown at 96, to form the curved flange 100b of the stiffener 100. While the above example illustrates the use of the carrier film 32 to form plies along curves in a single plane, the carrier film 32 may also be used to form plies over tools (not shown) having compound curved surfaces, joggles, etc. Moreover, the carrier film 32 may be employed to form ply layups having more than two legs, used to fabricate structures possessing, for example, a "C" or a "Z" shaped cross section.

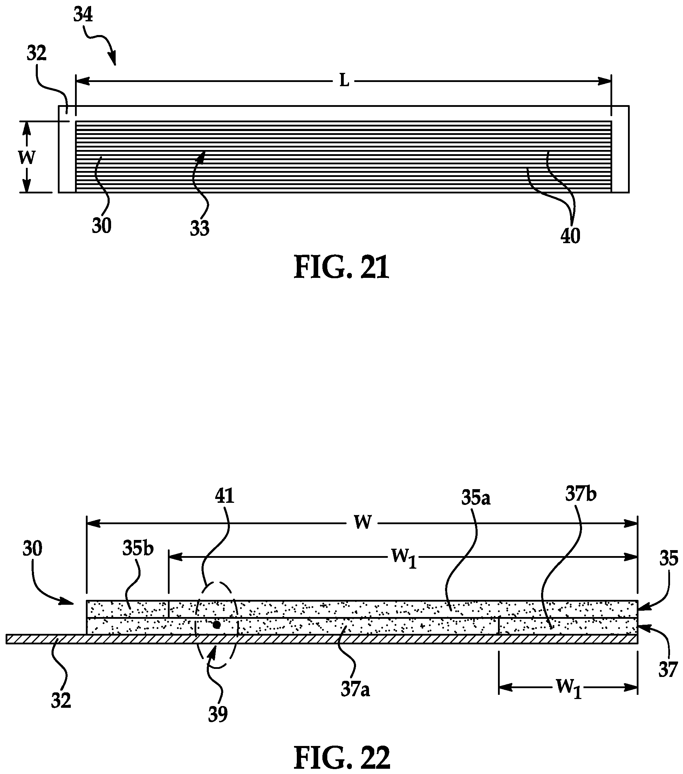

FIG. 21 illustrates a ply carrier assembly 34 comprising a straight zero degree ply 30 placed on and adhered to a deformable carrier film 32. In contrast to previously discussed configurations in which the ply 30 is fabricated by steering individual narrow strips of slit tape or tows onto a curved tool (e.g. the tool 90 shown in FIG. 20), the zero degree ply 30 shown in FIG. 21 may be formed by laying down a single straight length of tape 33 having a length L, and a width W that may be sufficiently wide to form both the web 100a and the flange 100b of the stiffener 100 shown in FIG. 19. While the illustrated stiffener 100 has only two legs (web 100a and flange 100b), stiffeners may be fabricated having more than two legs and other cross sectional shapes, including but not limited to a "C" shape and a "Z" shape. The tape 33 used to form the ply 30 may comprise unidirectional composite prepreg tape cut from a reel or roll of tape (not shown) in which the unidirectional reinforcing fibers 40 are oriented in the longitudinal direction of the ply carrier assembly 34.

As shown in FIG. 22, it may be possible to form the zero degree ply 30 using multiple layers 35, 37 of straight tape having a width **W₁** that is less than the width **W** of the ply 30, but greater than that of a typical tow (not shown). In some examples, each layer 35, 37 may comprise one or more segments 35a, 35b, 37a, 37b of tapes which preferably span an area 41 where the ply 30 is to be formed around a curved bend line or axis 39 during a subsequent forming step. Segments 35a, 35b, 37a, 37b are formed in sequential operations in order to eliminate the overlap region from creating the behavior of fiber shearing over long distances.

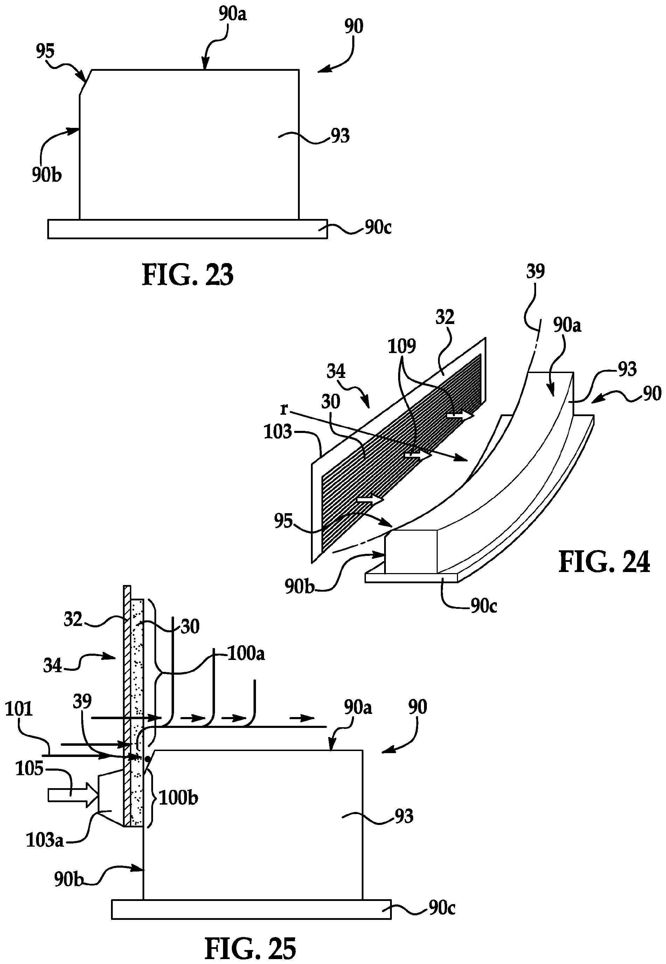

FIG. 23 illustrates a curved forming tool 90 similar to the tool 90 previously discussed in connection with FIG. 20. The curved forming tool 90 comprises a curved main body 93 supported on a tool base 90c. The curved forming tool 90 includes a first curved forming surface 90b used to form a first leg of a structure such as the flange 100b of the stiffener 100 shown in FIG. 19, and a second curved forming surface 90a for forming a second leg of the structure such as the web 100a of stiffener 100. A chamfer 95 or a radius corner (not shown) may be provided at the intersection of the curved tool surfaces 90a, 90b in order to assist in folding or bending one of more of the zero degree plies 30 during the forming process so as to avoid stress concentrations in the ply being formed.

FIG. 24 shows a ply carrier assembly 34 having a substantially flat zero degree ply 30 about to be steered onto the tool 90. In this example, the ply carrier assembly 34 has been placed on a substantially flat tool 103 that may used to transport the ply carrier assembly 34 to the location of the tool 90, and which may also be used to assist in steering the ply 30 onto the curved tool surface 90b, as shown by the arrows 109. The numeral 39 designates a curved axis or bend line having a radius of curvature r about which the ply carrier assembly 34 will be folded or bent in a later discussed forming step.

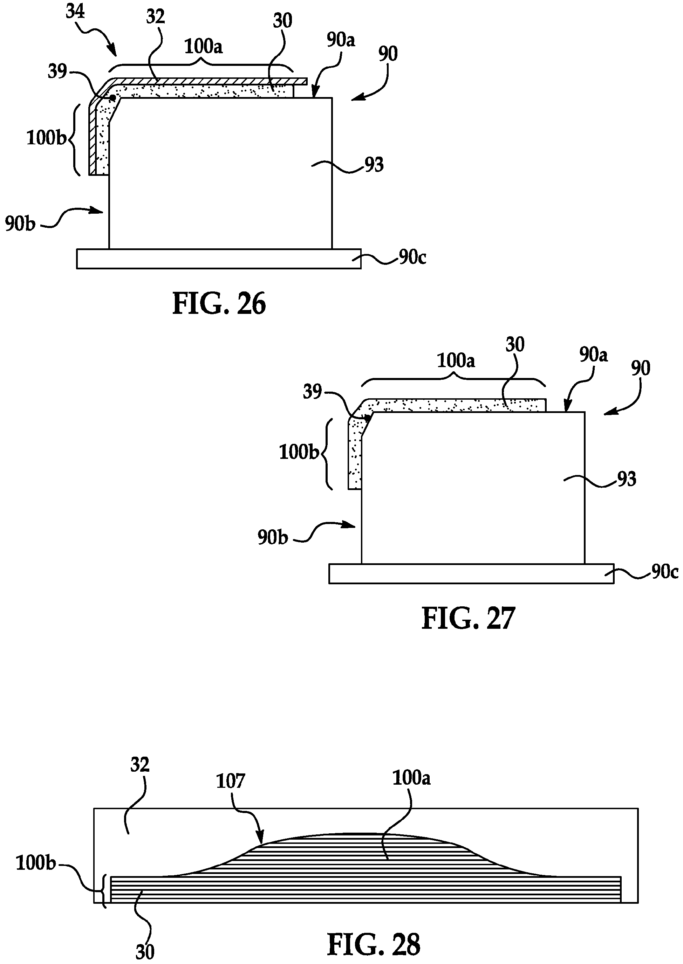

FIG. 25 illustrates the ply carrier assembly 34 having been steered onto and conformed to the first curved tool surface 90b of the tool 90, and wherein the flange portion 100b of the ply 30 has been clamped against the curved tool surface 90b using a suitable clamping device 103a and clamping force shown at 105. With the flange portion 100b clamped against the curved tool surface 90b, the remaining web portion 100a of the ply 30 is formed onto the second curved tool surface 90a, as shown by the arrow 101. In this second forming step, the web portion 100a is pushed over the bend line 39, creating an "L" shape in the carrier film 32 and web portion 100a of the ply, as shown in FIG. 25, while the flange portion 100b of the ply 30 remains clamped against the first curved tool surface 90b. Following this second forming step, the zero degree ply 30 is fully formed onto the curved tool surface 90a, as shown in FIG. 26. Then, as shown in FIG. 27, the carrier film 32 may be removed from the ply 30. During each of the forming steps described above, the carrier film 32 may be stretched or otherwise deformed in order to alter the orientation of the fibers 40 (FIG. 21), as the tape 33 is sheared onto the curved tool surfaces 90a, 90b.

As previously discussed, the carrier film 32 functions to stabilize the ply 30 as it is sheared into place on the tool 90, and may be deformed, as by stretching during the forming process to aid in controlling the orientation of the fibers 40 (FIG. 21) in the tape 33 so that they deform in a desired manner and assume a desired orientation that results in a stiffener 100 which exhibits desired performance characteristics.

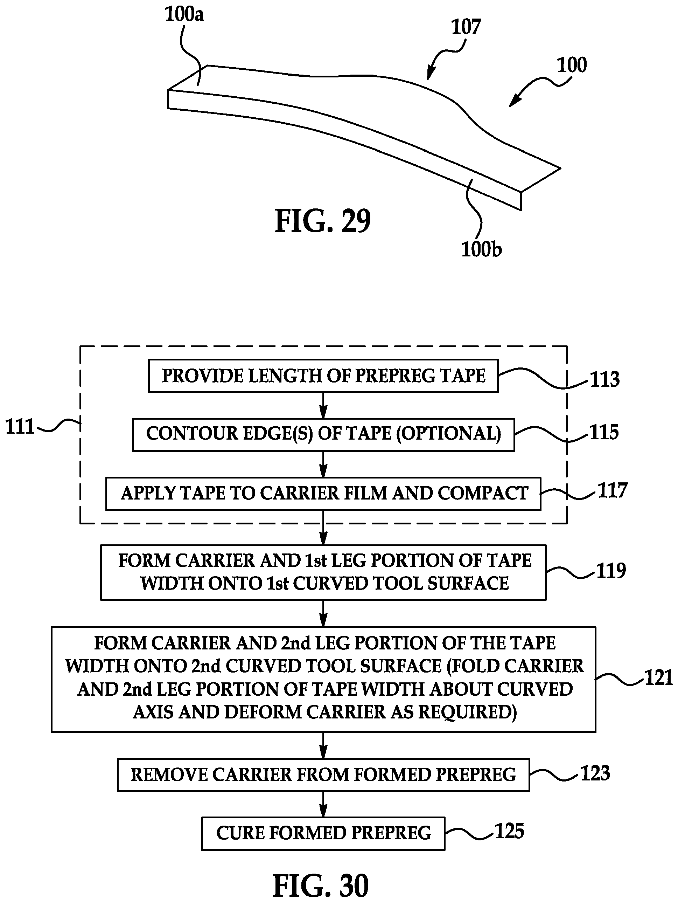

As the ply 30 is being laid up onto the carrier film 32, it may be possible to trim one or more edges of the ply 30 to achieve a desired edge contour on the finished part. For example, referring to FIG. 28, a zero degree ply 30 formed from unidirectional prepreg tape includes a web portion 100a and a flange portion 100b. The outer edge of the web portion 100a may be trimmed as by cutting to form a contoured edge 107 prior to the placing the ply 30 on the carrier film 32. Following forming of the ply 30 over the contoured tool 90 shown in FIGS. 23-27, the finished stiffener 100 includes a web 100a having the contoured edge 107 as shown in FIGS. 28 and 29. In other configurations, it may be possible to form the contoured edge 107 by cutting both the ply 30 and the carrier film 32 after the ply 30 has been placed on the carrier film 32.

Attention is now directed to FIG. 30 which illustrates the overall steps of a method of fabricating a composite structure, such as the stiffener 100 shown in FIGS. 19 and 29 that has compound curves or contours. At 111 a ply 30 is laid up by providing a length of unidirectional prepreg tape at 113, contouring the edges of the tape, if desired at 115 and then applying and compacting the tape on a carrier film 32 at step 117. At 119, the carrier film 32 and a first leg or flange portion 100b of the ply 30 is formed onto a first curved tool surface 90b, as previously described in connection with FIGS. 25 and 26. Next, at 121, the carrier film 32 and a second leg or web portion 100a of the prepreg tape ply 30 is formed onto the second curved tool surface 90a, (see FIGS. 26 and 27). This second step of the forming process may be carried out by folding or bending the second leg or web portion 100a of the tape ply 30 about the bend line 39 (FIG. 25) while the carrier film 32 is being deformed, as by stretching, to control the fiber angles during the forming process. Following step 121, the carrier film 32 may be removed from the formed prepreg, as shown at 123. Finally, at 125, the formed prepreg may be cured.

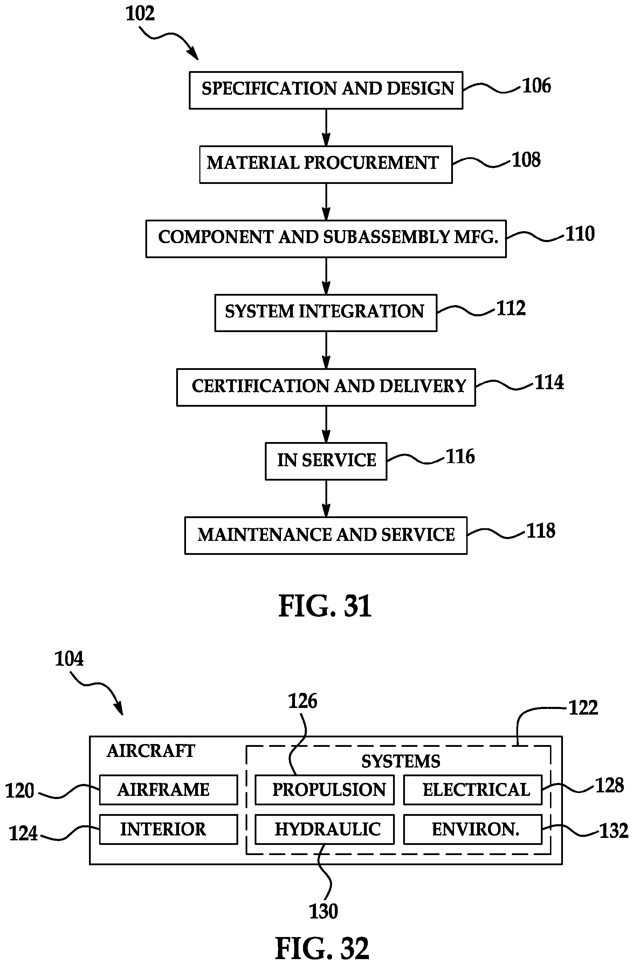

Referring to FIGS. 31 and 32, configurations of the disclosure may be used in the context of an aircraft manufacturing and service method 102 as shown in FIG. 31 and an aircraft 104 as shown in FIG. 32. During pre-production, exemplary method 102 may include specification and design 106 of the aircraft 104 and material procurement 108. During production, component and subassembly manufacturing 110 and system integration 112 of the aircraft 104 takes place. During step 110, the disclosed method and apparatus may be employed to fabricate composite parts such as fuselage frame sections and stiffeners which are then assembled at step 112. Thereafter, the aircraft 104 may go through certification and delivery 114 in order to be placed in service 116. While in service by a customer, the aircraft 104 may be scheduled for routine maintenance and service 118 (which may also include modification, reconfiguration, refurbishment, and so on).

Each of the processes of exemplary method 102 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 32, the aircraft 104 produced by exemplary method 102 may include an airframe 120 with a plurality of systems 122 and an interior 124. The disclosed method and apparatus may be employed to fabricate frame sections and stiffeners which form part of the airframe 120. Examples of high-level systems 122 include one or more of a propulsion system 126, an electrical system 128, a hydraulic system 130, and an environmental system 132. Any number of other systems may be included. Although an aerospace example is shown, the principles of the disclosure may be applied to other industries, such as the automotive industry.

The apparatus disclosed herein may be employed during any one or more of the stages of the production and service method 102. For example, components or subassemblies corresponding to production process 110 may be fabricated or manufactured in a manner similar to components or subassemblies produced while the aircraft 104 is in service. Also, one or more apparatus configurations may be utilized during the production stages 110 and 112, for example, by substantially expediting assembly of or reducing the cost of an aircraft 104. Similarly, one or more apparatus configurations may be utilized while the aircraft 104 is in service, for example and without limitation, to maintenance and service 118.

Although the configurations of this disclosure have been described with respect to certain exemplary configurations, it is to be understood that the specific configurations are for purposes of illustration and not limitation, as other variations will occur to those of skill in the art.

## Claims

1. A method of fabricating a composite stiffener having a curved web and at least one curved flange, comprising:
placing a substantially straight length of unidirectional prepreg tape (33) on a carrier (32) to form a ply carrier assembly (34), wherein unidirectional reinforcing fibers (40) in the unidirectional prepreg tape (33) are oriented in the longitudinal direction of the ply carrier assembly (34);
forming the at least one curved flange by using the carrier (32) to steer a first portion of the tape (33) onto a first curved tool surface (90b); and
forming the curved web by using the carrier (32) to form a second portion of the tape (33) onto a second curved tool surface (90a); and
wherein placing the tape (33) on the carrier (32) includes forming overlapping segments of tape (33) on the carrier (32) by sequentially forming offset segments of the tape (33) on the carrier (32) and overlapping the segments.

2. The method of claim 1, wherein forming the curved web includes deforming the carrier (32) as the second portion (100a) of the tape (33) is being formed onto the second curved tool surface (90a).

3. The method of claim 1, wherein:
steering the first portion (100b) of the tape (33) includes a steering a first portion (100b) of a width of the tape (33), and
forming the second portion (100a) of the tape (33) includes forming a second portion (100a) of the width of the tape (33).

4. The method of claim 1, wherein a single width of the tape (33) is used to form the at least one curved flange and the curved web.

5. The method of claim 1, wherein forming the curved web includes shearing a portion of a width of the tape (33) about a curved bend line onto the second tool surface (100a).

6. The method of claim 1, further comprising:
removing the carrier (32) from the tape (33) after the curved web and the at least one curved flange have been formed; and
curing the tape (33).

7. The method of claim 1, further comprising:
clamping the at least one curved flange (100b) against the first curved tool surface (90b), and
wherein forming the curved web is performed while the at least one curved flange is clamped against the first tool surface (100b).

8. The method of claim 7, further comprising:
contouring an edge of the tape (33) along its length before the at least one curved flange and the curved web are formed.

## Patentansprüche

1. Verfahren zur Herstellung eines Verbundstoff-Versteifungselements, das ein gewölbtes Gewebe und wenigstens einen gewölbten Flansch hat, wobei das Verfahren Folgendes aufweist:
Platzieren eines im Wesentlichen geraden Stücks eines unidirektionalen Prepreg-Bands (33) auf einem Träger (32), um eine Schichtträgeranordnung (34) zu bilden, wobei unidirektionale Verstärkungsfasern (40) in dem unidirektionalen Prepreg-Band (33) in der Längsrichtung der Schichtträgeranordnung (34) orientiert sind;
Bilden des wenigstens einen gewölbten Flansches unter Verwendung des Trägers (32), um einen ersten Abschnitt des Bands (33) auf eine erste gewölbte Werkzeugfläche (90b) hinauf zu lenken; und
Bilden des gewölbten Gewebes unter Verwendung des Trägers (32), um einen zweiten Abschnitt des Bands (33) auf eine zweite gewölbte Werkzeugfläche (90a) hinauf zu bilden; und
wobei das Platzieren des Bands (33) auf dem Träger (32) das Bilden von sich überlappenden Segmenten des Bands (33) auf dem Träger (32) durch sequentielles Bilden von versetzten Segmenten des Bands (33) auf dem Träger (32) und Überlappen der Segmente beinhaltet.

2. Verfahren nach Anspruch 1, wobei das Bilden des gewölbten Gewebes das Deformieren des Trägers (32) beinhaltet, während der zweite Abschnitt (100a) des Bands (33) auf die zweite gewölbte Werkzeugfläche (90a) hinauf gebildet wird.

3. Verfahren nach Anspruch 1, wobei:
das Lenken des ersten Abschnitts (100b) des Bands (33) ein Lenken eines ersten Abschnitts (100b) einer Breite des Bands (33) beinhaltet, und
das Bilden des zweiten Abschnitts (100a) des Bands (33) das Bilden eines zweiten Abschnitts (100a) der Breite des Bands (33) beinhaltet.

4. Verfahren nach Anspruch 1, wobei eine einzelne Breite des Bands (33) verwendet wird, um den wenigstens einen gewölbten Flansch und das gewölbte Gewebe zu bilden.

5. Verfahren nach Anspruch 1, wobei das Bilden des gewölbten Gewebes das Scheren eines Abschnitts einer Breite des Bands (33) um eine gewölbte Biegelinie herum auf die zweite Werkzeugfläche (100a) hinauf beinhaltet.

6. Verfahren nach Anspruch 1, das des Weiteren Folgendes aufweist:
Entfernen des Trägers (32) von dem Band (33), nachdem das gewölbte Gewebe und der wenigstens eine gewölbte Flansch gebildet worden sind; und
Aushärten des Bands (33).

7. Verfahren nach Anspruch 1, das des Weiteren Folgendes aufweist:
Klemmen des wenigstens einen gewölbten Flansches (100b) gegen die erste gewölbte Werkzeugfläche (90b), und
wobei das Bilden des gewölbten Gewebes durchgeführt wird, während der wenigstens eine gewölbte Flansch gegen die erste Werkzeugfläche (100b) geklemmt ist.

8. Verfahren nach Anspruch 7, das des Weiteren Folgendes aufweist:
Konturieren einer Kante des Bands (33) entlang seiner Länge, bevor der wenigstens eine gewölbte Flansch und das gewölbte Gewebe gebildet werden.

## Revendications

1. Procédé de fabrication d'un raidisseur composite ayant une âme incurvée et au moins une semelle incurvée, ledit procédé comprenant :
le fait de placer une longueur - pratiquement droite - de bande de préimprégné unidirectionnel (33) sur un support (32), pour former un ensemble support de plis (34), procédé dans lequel des fibres de renfort unidirectionnelles (40) contenues dans la bande de préimprégné unidirectionnel (33) sont orientées suivant la direction longitudinale de l'ensemble support de plis (34) ;
la formation de l'au moins une semelle incurvée, en utilisant le support (32) pour diriger une première partie de la bande (33) sur une première surface d'outil incurvée (90b) ; et
la formation de l'âme incurvée, en utilisant le support (32) pour former une deuxième partie de la bande (33) sur une seconde surface d'outil incurvée (90a) ; et
procédé dans lequel le fait de placer la bande (33) sur le support (32) comprend la formation de segments de bande (33) se chevauchant sur le support (32), en formant séquentiellement des segments décalés de la bande (33) sur le support (32) et chevauchant les segments.

2. Procédé selon la revendication 1, dans lequel la formation de l'âme incurvée comprend la déformation du support (32), au fur et à mesure que la deuxième partie (100a) de la bande (33) est formée sur la seconde surface d'outil incurvée (90a).

3. Procédé selon la revendication 1, dans lequel :
le fait de diriger la première partie (100b) de la bande (33) comprend le fait de diriger une première partie (100b) d'une largeur de la bande (33), et
la formation de la deuxième partie (100a) de la bande (33) comprend la formation d'une deuxième partie (100a) de la largeur de la bande (33).

4. Procédé selon la revendication 1, dans lequel une seule largeur de la bande (33) est utilisée pour former l'au moins une semelle incurvée et l'âme incurvée.

5. Procédé selon la revendication 1, dans lequel la formation de l'âme incurvée comprend la découpe d'une partie d'une largeur de la bande (33) autour d'une ligne de pliage incurvée sur la seconde surface d'outil (100a).

6. Procédé selon la revendication 1, comprenant en outre :
l'enlèvement du support (32) retiré de la bande (33), après que l'âme incurvée et l'au moins une semelle incurvée ont été formées ; et
le durcissement de la bande (33).

7. Procédé selon la revendication 1, comprenant en outre :
le serrage de l'au moins une semelle incurvée (100b) contre la première surface d'outil incurvée (90b), et
procédé dans lequel la formation de l'âme incurvée est réalisée pendant que l'au moins une semelle incurvée est serrée contre la première surface d'outil (100b).

8. Procédé selon la revendication 7, comprenant en outre :
le contournage d'un bord de la bande (33) en suivant sa longueur, avant que soient formées l'au moins une semelle incurvée et l'âme incurvée.
